# EUROPEAN PATENT APPLICATION

(11) **EP 1 860 411 A2**
(43) Date of publication of application: **28.11.2007**
(21) Application number: 07108605.2
(22) Date of filing: 22.05.2007
(51) Int. Cl.: G01H 1/00

(54) **Electronic vibration sensor**

(30) Priority: 23.05.2006 US 419938
(71) Applicant: Honeywell International Inc., Morristown, NJ 07962 (US)
(72) Inventor: Hellickson, Dean R, Palm Harbor, FL 34684 (US); Dwyer, Michael D, Seminole, FL 33776 (US)
(74) Representative: Haley, Stephen

(57) **Abstract**

An electronic sensor is disclosed. The electronic sensor includes a processor, a processor memory coupled to the processor, and at least one input/output block in communication with the processor and with at least one external component monitor.
The sensor further includes one or more accelerometers in communication with the processor and coupled directly to at least one component, the one or more accelerometers sensing one or more mechanical vibrations from the at least one component, and the one or more mechanical vibrations oscillating below 1 MHz. The processor compares the one or more mechanical vibrations with a plurality of vibration samples programmed into the processor memory, each vibration sample specific to at least one sensor application.

## Description

This application is related to commonly assigned and co-pending U.S. Patent Application Serial No. 11/095,152, filed on March 31, 2005 and entitled "ACOUSTIC SIGNATURE TESTING FOR ELECTRONIC, ELECTROMECHANICAL, AND MECHANICAL EQUIPMENT" (the '152 Application). The '152 Application is incorporated herein by reference.

Mechanical systems produce vibration characteristics that are measurable as one or more components fail or required lubrication is not applied during routine maintenance schedules. Rotating mechanical equipment is present in a wide variety of environments, including aircraft, commercial vehicles, petrochemical plants, power production plants, and others. Because stopping this equipment for maintenance or to replace a failed component involves considerable expense in lost time and production, preventative vibration monitoring is routinely performed. In general, vibration levels in selected frequency bands are monitored and measured throughout these systems, and any defects in bearings or other mechanical or electromechanical elements are detected before catastrophic failure occurs. These monitoring techniques allow for more efficient maintenance scheduling. With the detection of more extreme levels of vibration, the equipment can be automatically shut down.

Prognosis is the ability to predict or forecast the future condition of a component and/or system of components, in terms of failure or degraded condition, so that it can satisfactorily perform its operational requirement. Current prognosis technologies enable early vibration fault detection and prediction of critical rotating mechanical components (such as, bearings and gears) by focusing on diagnostics (for example, damage detection). Several strategies exist for addressing damage detection. One strategic approach is data-based, where a user looks for changes due to an accumulation of damage statistics in various types of time and/or frequency domains. However, most data-based methods serve as purely damage detection methods (that is, no damage assessment is provided).

Additional available prognostic methods can be further divided into methods based on deterministic and probabilistic modeling of fault or damage propagation. These methods are still application-specific, since they are closely tied to a particular damage detection problem. Furthermore, they are not considered general or comprehensive solutions.

The following specification addresses problems with monitoring a plurality of operating conditions experienced by one or more mechanical assemblies. Particularly, in one embodiment, an electronic sensor is provided. The electronic sensor includes a processor, a processor memory coupled to the processor, and at least one input/output block in communication with the processor and with at least one external component monitor. The sensor further includes one or more accelerometers in communication with the processor and coupled directly to at least one component, the one or more accelerometers sensing one or more mechanical vibrations from the at least one component, and the one or more mechanical vibrations oscillating below 1 MHz. The processor compares the one or more mechanical vibrations with a plurality of vibration samples programmed into the processor memory, each vibration sample specific to at least one sensor application.

These and other features, aspects, and advantages will become better understood with regard to the following description, appended claims, and accompanying drawings where:

Figure 1 is a block diagram of an embodiment of a system incorporating an electronic vibration sensor;

Figure 2 is a block diagram of an embodiment of an electronic vibration sensor; and

Figure 3 is a flow diagram illustrating an embodiment of a method for monitoring one or more mechanical assemblies.

Like reference numbers and designations in the various drawings indicate like elements.

The following detailed description discusses at least one embodiment of an accelerometer-based electronic sensor coupled to a mechanical assembly. The electronic sensor will detect at least one condition where maintenance is required or detect a failure of one or more mechanical devices so that corrective maintenance action is taken. The electronic sensor comprises one or more vibration sensors and is programmable for one or more specific applications. Advantageously, the sensor outputs diagnostic data to indicate one or more fault conditions (for example, to illuminate a light on an instrument panel or be sent and stored by an onboard flight computer). This accelerometer-based electronic sensor is installed primarily where a failure mode frequency of oscillation is in the less than 1 MHz frequency range.

Proposed applications for the electronic sensor include mechanical devices such as jack screws, flap motors, landing gear components, spoiler extenders, control servos, APU, control surface actuators, and the like. In a motorized vehicle, vibration monitoring performed by the electronic sensor will detect worn tappets, periodic thumping of one or more flat tires, bearing failures in water pumps, worn brake pads, wheel bearing failures, and the like. Around a home, monitoring by the electronic sensor is further extended to include pool pumps, air handler motors, air conditioning compressors, lawn watering pumps, and the like. Further applications include monitoring of power generating equipment, motors, valves, and other related electromechanical equipment.

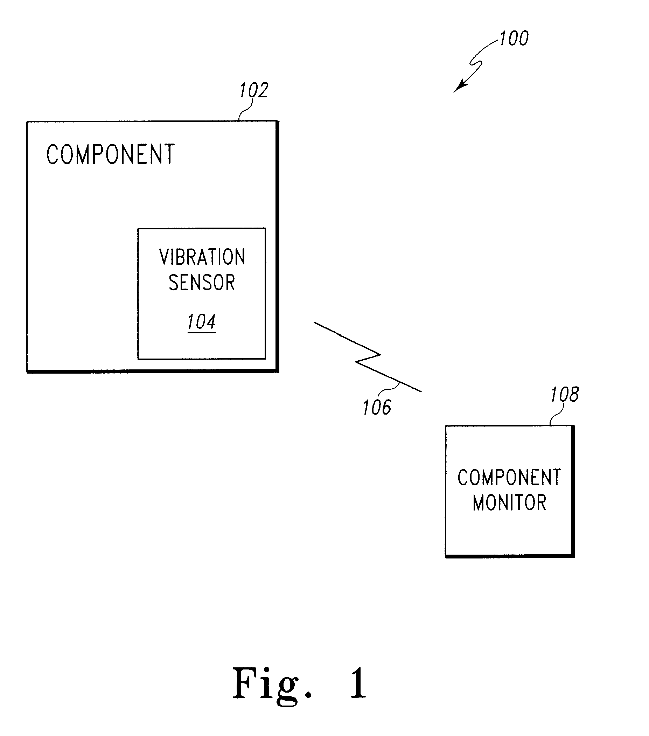

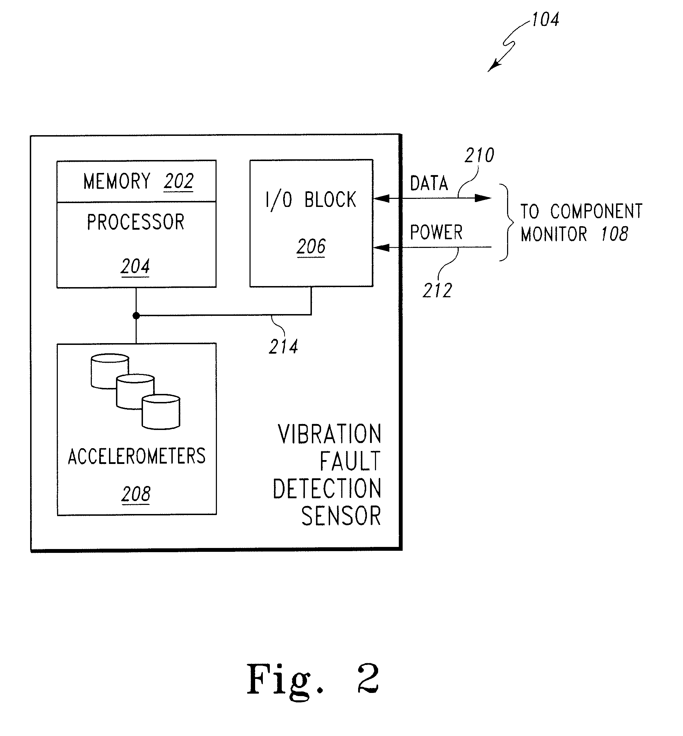

Figure 1 is a block diagram of an embodiment of a system 100 incorporating an electronic vibration sensor. System 100 comprises component 102, vibration sensor 104 and component monitor 108. It is noted that for simplicity in description, a single component 102 and a single vibration sensor 104 are shown in Figure 1. However, it is understood that system 100 is capable of accommodating any appropriate number of components 102 and vibration sensors 104 (for example, one or more components 102 and one or more vibration sensors 104) in a single system 100. In this example embodiment, vibration sensor 104 is proportionally sized to be coupled directly to component 102 (or an equivalent component). The composition of vibration sensor 104 is described below in further detail with respect to Figure 2.

Component monitor 108 is in communication with vibration sensor 104 via sensor communication interface 106. In one implementation, sensor communication interface 106 is a wireless communication link between component monitor 108 and vibration sensor 104. In other implementations, sensor communication interface 106 is a serial wired communication interface between component monitor 108 and vibration sensor 104. Sensor communication interface 106 is further capable of supplying operating power to vibration sensor 104. Other means for providing operating power to vibration sensor 104 are possible (for example, solar, dry cells, and the like).

In operation, vibration sensor 104 senses a plurality of vibration readings from component 102. Vibration sensor 104 processes the plurality of vibration readings and indicates to component monitor 108 a current operating condition of component 102. In one implementation, component 102 is a flap motor on a left wing of an aircraft. Vibration sensor 104 is programmed to compare the plurality of vibration readings from component 102 (that is, vibrations of the flap motor) with one or more sets of expected vibration readings. Each set of expected vibration readings correspond with at least one vibration sample for component 102.

The at least one vibration sample for component 102 exhibits characteristics during operation that indicates when there is an operational problem or the potential for a future operational problem with at least a portion of component 102. In one implementation, component 102 emits one or more mechanical vibrations during start up sequences and/or during operation. A change in frequency of these vibrations provides information as to what portion of component 102 is, or is not, operating properly. A lack of vibration also provides information as to which portion of component 102 is not operating properly. In alternate implementations, component 102 does not vibrate when properly operating. In this case, one or more mechanical vibration emissions from component 102 are an indication that at least a portion of component 102 is not operating properly.

Vibration sensor 104 compares the plurality of vibration readings with the at least one corresponding vibration sample of component 102. Vibration sensor 104 updates component monitor 108 with at least one indication of normal operating activity (that is, acceptable levels of mechanical vibration indicating component 102 is operating as expected). When vibration sensor 104 detects that one of the plurality of vibration readings from component 102 does not match the at least one corresponding vibration sample of component 102, vibration sensor 104 immediately informs component monitor 108 that one or more failure conditions have occurred with component 102. In this example embodiment, component monitor 108 comprises an on-board flight management system that indicates to an operator that the flap motor on the left wing of the aircraft has failed and corrective action is to be taken immediately. Moreover, component monitor 108 is not responsible for detecting the failure. Vibration sensor 104, coupled directly to component 102, is intelligent enough to determine whether component 102 has failed.

Figure 2 is a block diagram of an embodiment of vibration sensor 104. Vibration sensor 104 comprises memory 202, processor 204, input/output (I/O) block 206, and accelerometers 208. In one implementation, memory 202 and processor 204 reside in a single programmable logic device such as a microprocessor. In other implementations, processor 204 is a separate microprocessor, application-specific integrated circuit (ASIC), field-programmable gate array (FPGA), field-programmable object array (FPOA), and the like. Memory 202 will provide processor 204 with data and machine-readable instructions stored in a read only memory (ROM), random access memory (RAM), flash reprogrammable memory, and the like. Memory 202 is programmed with one or more vibration samples, each vibration sample applicable to a particular application.

Processor 204, I/O block 206, and accelerometers 208 are in communication with one another over sensor interconnect bus 414. In one implementation, sensor bus 414 is a bi-directional communication bus linking processor 204, I/O block 206, and accelerometers 208. I/O block 206 sends and receives one or more data signals from data signal line 210 and at least one power signal from power signal line 212. It is noted that for simplicity in description, a single data signal line 210 and a single power signal line 212 are shown in Figure 2. However, it is understood that vibration sensor 204 is capable of accommodating any appropriate number of data signal lines 210 and power signal lines 212 (for example, at least one data signal line 210 and at least one power signal line 212) for a single vibration sensor 104. In one implementation, sensor communication interface 106 comprises data signal line 210 and power signal line 212. In other implementations, power signal line 212 receives the at least one power signal from a local source (not shown). Accelerometers 208 are integrated within vibration sensor 104. In one implementation, one or more accelerometers 208 sense a linear change in rate (acceleration) as vibration sensor 104 vibrates corresponding to current operation of component 102. In this example embodiment, the one or more accelerometers 208 measure a plurality of oscillation frequencies below 1 MHz.

In operation, vibration sensor 104 is configured for a particular application. Accelerometers 208 and processor 204 are specifically programmed to detect one or more vibration samples of a particular component 102 being monitored. For instance, one or more sensors 104 are programmed to detect a particular mechanical vibration sample for a landing gear motor, an elevator jack screw, and the like. In one implementation, vibration sensor 104 is programmed for monitoring at least one jack screw found in a typical aircraft tail. When the at least one jack screw is functioning, accelerometers 208 detect a plurality of vibration characteristics of metal to metal contact. Processor 202 compares at least one corresponding vibration sample supplied by memory 202 to determine if a particular "Maintenance Required" message must be sent to component monitor 108 (for example, a flight computer). The at least one corresponding vibration sample consists of one or more vibration waveform samples previously recorded from a jack screw operating without lubrication and from a jack screw that experiences a total failure. Processor 204 makes the comparison and issues at least one alert if at least one vibration waveform sample substantially matches at least one failure pattern.

For example, while an elevator trim is being set by the jack screw, if accelerometers 208 detect a plurality of mechanical vibration characteristics substantially similar to a vibration waveform sample of the jack screw stripping, an "Unsafe For Flight" signal is sent to component monitor 108 from vibration sensor 104. The above examples are representative of a particular application for vibration sensor 104. Programmable vibration samples allow vibration sensor 104 to be applied to a variety of mechanical and electromechanical assembly monitoring applications.

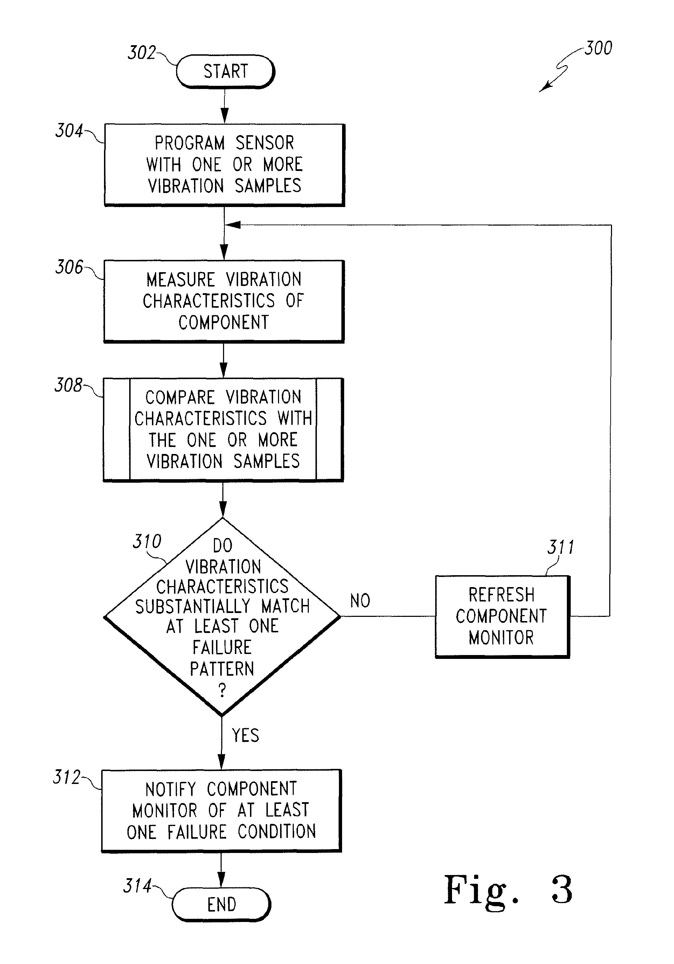

Figure 3 is a flow diagram illustrating a method 300 for monitoring one or more mechanical assemblies. The method of Figure 3 starts at block 302. In an example embodiment, after vibration sensor 104 is programmed with one or more vibration samples at block 304, method 300 begins measuring a plurality of vibration characteristics specific to component 102 at block 306. A primary function of method 300 is to indicate to component monitor 108 when one or more vibration characteristics of component 102 substantially match at least one failure pattern present in the one or more vibration samples programmed into vibration sensor 104.

At block 308, the plurality of vibration characteristics are compared with the one or more vibration samples previously programmed into vibration sensor 104. If one or more of the plurality of vibration characteristics (for example, one or more vibration waveform samples) substantially match at least one failure pattern at block 310, vibration sensor 104 notifies component monitor 108 at block 312. In this example embodiment, the one or more vibration waveform samples measured by one or more accelerometers 208 are characterized as oscillating below 1 MHz. If a match is not detected, component monitor 108 is refreshed to indicate normal operation of component 102 at block 311 before method 300 returns to block 306 to continue monitoring.

## Claims

1. An electronic sensor (104), comprising:
a processor (204);
a processor memory (202) coupled to the processor (204);
at least one input/output block (206) in communication with the processor (204) and with at least one external component monitor (108);
one or more accelerometers (208) in communication with the processor (204) and coupled directly to at least one component (102), the one or more accelerometers (208) sensing one or more mechanical vibrations from the at least one component (102), the one or more mechanical vibrations oscillating below 1 MHz; and
wherein the processor (204) compares the one or more mechanical vibrations with a plurality of vibration samples programmed into the processor memory (202), each vibration sample specific to at least one sensor application.

2. The sensor (104) of claim 1, wherein the processor (204) comprises one of a programmable logic device, a microprocessor, an application-specific integrated circuit, a field-programmable gate array, and a field-programmable object array.

3. The sensor (104) of claim 1, wherein the processor memory (202) comprises one of read only memory, random access memory, and flash reprogrammable memory.

4. The sensor (104) of claim 1, wherein the at least one input/output block (206) comprises one or more bi-directional data signal lines (210) and at least one input power signal (212) in communication with the at least one external component monitor (108).

5. The sensor (104) of claim 1, wherein the at least one input/output block (206) comprises one of a serial wired communication interface connection and a wireless communication interface connection (106).

6. The sensor (104) of claim 1, wherein the at least one external component monitor (108) comprises an on-board flight management system.

7. The sensor (104) of claim 1, wherein the one or more accelerometers (208) are integrated within the electronic sensor (104).

8. The sensor (104) of claim 1, wherein the plurality of vibration samples comprise one or more vibration waveform samples indicative of one or more known failures experienced by at least a portion of the component (102).

9. The sensor (104) of claim 1, wherein the plurality of vibration samples comprise one or more vibration waveform samples indicative of proper operation of at least a portion of the component (102).
